# EUROPÄISCHE PATENTSCHRIFT

(11) **EP 2 810 857 B1**
(45) Veröffentlichungstag und Bekanntmachung des Hinweises auf die Patenterteilung: **12.10.2016**
(21) Anmeldenummer: 14163846.0
(22) Anmeldetag: 08.04.2014
(51) Int. Cl.: B62H 5/14

(54) **Verfahren und Vorrichtung zur Realisierung eines elektrischen Fahrradschlosses**
Method and device for implementing an electrical bicycle lock
Procédé et dispositif de réalisation d'un antivol de vélo électrique

(30) Priorität: 04.06.2013 DE 102013210358
(43) Veröffentlichungstag der Anmeldung: 10.12.2014
(73) Patentinhaber: ROBERT BOSCH GMBH, 70442 Stuttgart (DE)
(72) Erfinder: Dasbach, Gregor, 72762 Reutlingen (DE)

(56) Entgegenhaltungen:
- DE-A1- 10 133 080
- DE-A1-102005 041 269
- JP-A- 2001 171 572
- JP-A- 2001 182 410

## Beschreibung

Die Erfindung betrifft ein Verfahren und eine Vorrichtung zur Sicherung eines Fahrrads gegen Diebstahl sowie ein Fahrrad, welches mit einem derartigen Verfahren bzw. einer entsprechenden Vorrichtung ausgestattet ist.

### Stand der Technik

Zur Sicherung von Fahrrädern gegen Diebstahl sind verschiedene Arten von Fahrradschlössern bekannt. So sind neben Fahrradschlössern, die nachträglich mit einer entsprechenden Befestigung an dem Fahrradrahmen befestigt werden können, auch fest installierte Schlösser im Einsatz. Während separate Fahrradschlösser den Vorteil haben, individuell eingesetzt zu werden, beispielsweise durch eine Ankettung an einen ortsfesten Gegenstand, ermöglichen fest installierte Schlösser eine schnelle Handhabung.

Bei der Verwendung eines Elektrofahrrads gibt es darüber hinaus auch die Möglichkeit, die Elektrifizierung des Fahrrads für die Zwecke des Diebstahlschutzes zu nutzen. So wird beispielsweise in der DE 10 2005 041 269 A1 eine Schließeinrichtung in Form eines Rahmenschlosses mit einem beweglichen Riegel beschrieben, der über eine Blockiereinrichtung elektrisch gegen eine Entriegelung gesichert werden kann.

Im Falle der Verriegelung mittels eines fest installierten Fahrradschlosses kann es jedoch zu einer Situation kommen, in der das Verriegelungselement auf eine Speiche trifft und der Schließvorgang somit blockiert wird. Aus der DE 101 33 080 A1 ist eine Vorrichtung bekannt, bei der nach einem Schließbefehl eine Öff-Öffnung bzw. Öffnungsbegrenzung für das Blockierelement überprüft wird und der Schließvorgang so lange zurückgehalten wird, bis eine Öffnung vorliegt. Dies hat jedoch den Nachteil, dass ggf. beim Abstellen des Fahrrads keine Schließung erfolgt und trotzdem über eine längere Zeit eine elektrische Schließanforderung vorliegt.

In der JP 2001171572 A wird ein Schließmechanismus für ein Rad eines elektrisch antreibbaren Fahrrads mit den Merkmalen des Oberbegrifes des Anspruchs 1 beschrieben. Bei diesem Schließmechanismus sind Detektionseinheiten vorgesehen, die nach einer Ansteuerung des Schließmechanismus' überprüfen, inwieweit ein mit dem Schließvorgang bewegter Schließhebel sich in der Schließposition befindet. Sollten die Detektionseinheiten feststellen, dass sich der Schließhebel nicht in der vorgesehenen Schließposition befindet, wird der Motor des Fahrrads derart angesteuert, dass sich das Rad bewegt und eine geeignete Schließsituation ergibt.

### Offenbarung der Erfindung

Die vorliegende Erfindung betrifft eine Vorrichtung sowie ein Verfahren zur Diebstahlsicherung eines Zweirads, sowie ein Fahrrad, welches mit einer solchen Vorrichtung bzw. einem solchen Verfahren ausgestattet ist. Dabei ist eine Steuereinheit vorgesehen, mittels der eine Schließeinrichtung elektrisch aktiviert werden kann, um wenigstens das Drehen eines Rades an einem Zweirad zu blockieren. Weiterhin ist eine Detektionseinheit vorgesehen, welche zusätzlich erfasst, inwieweit eine Blockierung des Rades durch die Schließeinrichtung überhaupt erfolgen kann. Der Kern der Erfindung besteht dabei darin, dass die Schließeinrichtung erst dann elektrisch aktiviert, d.h. betätigt wird, wenn auch tatsächlich eine Blockierung des Rades, z.B. mittels eines beweglichen Blockierelements der Schließeinrichtung möglich ist.

Der Vorteil der erfindungsgemäße Vorrichtung bzw. des damit verbundenen Verfahrens liegt darin, dass nur dann eine elektrische Schließanforderung vorliegt, wenn auch eine Schließung der Schließeinrichtung erfolgen kann. Somit werden unnötige Ansteuerungen bzw. Haltezeiten des in der Schließeinrichtung befindlichen Aktuators vermieden, so dass der Betrieb energieschonender erfolgt.

Um die Schließmöglichkeit der Schließeinrichtung und somit die Möglichkeit zum Blockieren des Rads zu erfassen, wird der Weg überprüft, den das bewegliche Blockierelement in der Schließeinrichtung zum Blockieren überwinden muss. Dabei kann es sich bei dem Blockierelement beispielsweise um einen Riegel, einen Bolzen oder einen Bügel handeln, der mittels einer elektromechanischen Einrichtung bewegt werden kann.

Bei der Verwendung der erfindungsgemäßen Vorrichtung an einem Zweirad bzw. einem Fahrrad stellt sich regelmäßig die Situation ein, dass das Blockierelement der Schließeinrichtung nicht in die dafür vorgesehene Schließöffnung eingefahren werden kann, da ein Hindernis, z.B. eine Speiche des Rads im Weg ist. In diesem Fall detektiert eine entsprechende Einheit das Hindernis und verhindert die Ansteuerung zur Durchführung des Schließvorgang. Optional kann dabei auch eine Information an den Fahrer des Zweirads erfolgen, beispielsweise über ein mit der Steuereinheit verbundenes Display oder mittels einer akustischen Warnung, um den Fahrer über das ungesicherte Zweirad zu informieren. Statt dessen wird die Ansteuerung nur dann vorgenommen, d.h. der Schließvorgang nur dann initiiert, wenn festgestellt wird, dass kein Hindernis, d.h. auch keine Speiche auf dem Weg des Blockierelements in die Schließstellung vorliegt.

In einer Ausgestaltung der Erfindung ist vorgesehen, dass die Schließeinrichtung eine elektrisch ansteuerbare und somit aktivierbare Betätigungseinrichtung aufweist, die beispielsweise mittels eines Motors, einer Spindel, einer Feder oder eines Magneten realisiert ist. Durch diese Betätigungseinrichtung wird erreicht, dass das Blockierelement zum Verschließen und/oder zum Öffnen der Schließeinrichtung bewegt wird.

Bei einer besonderen Weiterbildung der Erfindung ist vorgesehen, dass bei einer Erfassung eines Hindernisses, insbesondere einer Speiche, auf dem Weg des Blockierelements zur Schließstellung das Rad des Zweirads durch eine am Zweirad befindliche Antriebseinheit derart gedreht wird, dass eine Schließung möglich wird. Derartige Antriebseinheiten sind beispielsweise bei Elektrofahrrädern am Vorderrad, am Hinterrad oder im Bereich der Tretkurbel angebracht. Da die Drehung des Rades lediglich das Hindernis bzw. die Speiche aus dem Weg des Blockierelements herausbewegen soll, ist kein sonderlich großes bzw. lang andauerndes Antriebsmoment notwendig. Ebenso ist die kurze Bewegung des gesamten Zweirads zu vernachlässigen, da das Rad kurzzeitig typischerweise lediglich um weniger als ein paar cm bewegt werden muss. Erfolgt die Überprüfung der günstigen Schließstellung für das Blockierelement bereits beim Abstellen des Zweirads, bekommt der Fahrer diese kurze zusätzliche Bewegung üblicherweise auch nicht mit.

Alternativ kann auch vorgesehen sein, dass der Motor z.B. beim Abstellen eine Art Wiegeschritt erzeugt, so dass sich das Rad und somit auch das Fahrrad kurzzeitig leicht vor und zurück bewegt, so dass eine optimale Schließposition gefunden werden kann.

Weitere Vorteile ergeben sich aus der nachfolgenden Beschreibung von Ausführungsbeispielen bzw. aus den abhängigen Patentansprüchen.

### Kurze Beschreibung der Zeichnungen

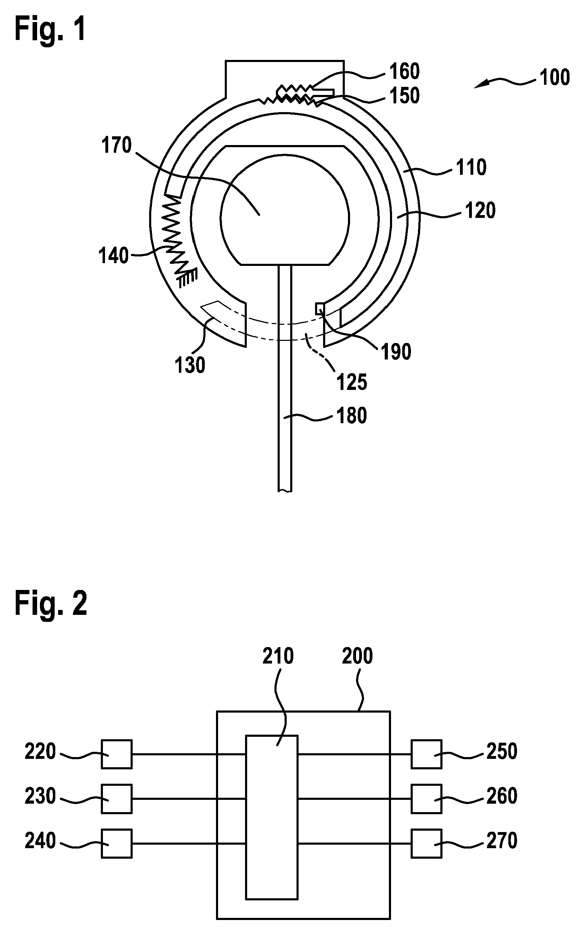

In der Figur 1 ist beispielhaft ein Rahmenschloss abgebildet, mit dem die Erfindung verdeutlicht wird. Das Blockschaltbild der Figur 2 stellt dagegen schematisch die Realisierung der Erfindung als (Steuerungs-)Verfahren dar.

### Offenbarung der Erfindung

Generell ist die vorliegende Erfindung bei einer Vielzahl von unterschiedlichen Bauformen von (Fahrrad-)Schlössern einsetzbar, bei denen ein bewegliches Blockierelement eingesetzt wird, um ein Rad eines Zweirads zu blockieren. Gemäß der Figur 1 soll die Erfindung anhand eines Rahmenschlosses dargestellt, wobei auch andere Fahrradschlösser, vor allem solche, die nicht fest an dem Zweirad verbaut sind mit der Erfindung ausgestattet sein können.

Wie in der Figur 1 abgebildet, ist eine typische Schließeinrichtung, wie sie in Form eines Rahmenschlosses 100 abgebildet ist, um einen Reifen 170 eines Rades angeordnet. Dabei ist in dem Gehäuse 110 des Rahmenschlosses 100 ein bewegliches Blockierelement bzw. ein Riegel 120 vorgesehen, welches im vorliegenden Ausführungsbeispiel drehbar gelagert ist. Dieser Riegel 120 wird im geschlossenen Zustand des Rahmenschlosses 100 in die Stellung 125 gedreht und in eine entsprechende gegenüberliegende Aufnahme 130 des Gehäuses 110 eingeführt bzw. eingerastet. Dabei umfasst das Gehäuse 110 und der Riegel 125 in der geschlossenen Stellung den Reifen 170 vollständig, so dass die Bewegung des zugehörigen Rades blockiert wird. Zur Entriegelung bzw. zum Öffnen des Schlosses kann optional eine Feder 140 vorgesehen sein, so dass lediglich die Einrastung in der Aufnahme 130 gelöst werden muss, um den Riegel 120 in seine Ausgangsstellung zurückzuführen.

Gemäß der vorliegenden Erfindung ist vorgesehen, dass eine Schließeinrichtung, wie sie in der Figur 1 beispielhaft dargestellt ist, ein Betätigungselement 160, z.B. einen Aktuator aufweist, der elektrisch betätigt werden kann und das Blockierelement 120 in die Blockierstellung bzw. von der Blockierstellung wieder zurück in die Ausgangsstellung bewegen lässt. Im vorliegenden Ausführungsbeispiel stellt das Betätigungselement 160 eine ansteuerbare Spindel da, mit deren Hilfe der Riegel 120 gedreht werden kann. In anderen Ausführungsbeispielen kann dieses Betätigungselement 160 jedoch auch ein einfacher Motor, eine verstellbare Feder oder ein Magnet zur Bewegung des Betätigungselements 160 sein.

Befindet sich das Rad beim Schließen des Schlosses in einer derartigen Stellung, dass zwischen dem bewegbaren Riegel 120 und der (Riegel-)Aufnahme 130 eine Speiche 180 vorhanden ist, ist ein automatischer durch das Betätigungselement 160 eingeleiteter Schließvorgang nicht mehr möglich. Zur Abhilfe wird gemäß der vorliegenden Erfindung mittels einer Detektionseinheit 190 überprüft, ob der Weg, den das Blockierelement bzw. der Riegel 120 bis zur (gegenüber liegenden) Aufnahme überwinden muss, durch eine Speiche 180 versperrt ist. Erst wenn durch die Detektionseinheit 190 erkannt wird, dass der Weg frei ist und somit eine Blockierung des Rades erfolgen kann, wird das Betätigungselement 160 zum Schließen des Riegels 120 angesteuert. Neben der energieschonenden Ansteuerung wird hierdurch zudem verhindert, dass der Riegel 120 die Speiche 180 mechanisch beeinträchtigt oder sogar beschädigt.

Um den Weg des Blockierelements optimal zu überwachen, kann die Detektionseinheit 190 direkt am Gehäuse 110, gegenüber von der Aufnahme 130 angebracht sein. Es ist jedoch auch möglich, die Detektionseinheit als Teil des Blockierelements vorzusehen, z.B. direkt auf dem vorderen Ende. Als Detektionseinheiten können dabei optische, elektrische, magnetische und/oder mechanische Sensoren verwendet werden, z.B. Hallsensoren, LEDs, Solarzellen, Lichtleiter, etc.

Die Steuerung des Verschließmechanismus' kann anhand des Blockschaltbildes in Figur 2 erläutert werden. Dabei ist eine zentrale Steuereinheit 200 vorgesehen, die vorzugsweise in der Schließeinrichtung untergebracht ist, jedoch auch extern angeordnet sein kann, beispielsweise in Kombination mit einem Steuerelement für ein Elektrofahrrad am Lenker des Fahrrads. Diese Steuereinheit 200 weist eine Verarbeitungseinheit 210 auf, die die Anforderung eines Schließvorgangs durch eine externe Eingabe 220, z.B. durch eine Fernbedienung oder Steuerung am Lenker des Fahrrads erhält. In Abhängigkeit von dieser Schließanforderung erfasst die Verarbeitungseinheit 210 von der Detektionseinheit 230, ob der Weg für das Blockierelement frei ist oder durch ein Hindernis, z.B. eine Speiche versperrt ist. Wird erkannt, dass kein Hindernis vorliegt, wird das Betätigungselement 250 bzw. der Aktuator entsprechende angesteuert. Falls der Weg versperrt ist, wird die Steuerung unterbunden und ggf. der Fahrer über eine optische und/oder akustische Warnung, z.B. über ein Display 270 entsprechend darüber informiert, dass das Fahrrad (noch) nicht abgeschlossen ist. Optional kann die Überprüfung, inwieweit das Hindernis weiterhin den Weg versperrt, im weiteren Verlauf immer wieder geprüft werden, so dass bei einer geeigneten Stellung des Rades der Schließvorgang initiiert werden kann.

In einem weiteren Ausführungsbeispiel kann vorgesehen sein, dass bei der Erfassung eines Hindernisses, insbesondere bei der Detektion einer Speiche im Bewegungsweg des Blockierelements, die Verarbeitungseinheit 210 kurzzeitig eine Antriebseinheit 260 des (Elektro-)Fahrrads ansteuert, z.B. ein Elektromotor, um die Speiche bewusst aus dem Weg zu drehen. Da es sich hierbei nur um eine geringe Radbewegung handelt, ist kein nennenswertes Antriebsmoment notwendig. Alternativ kann die Antriebseinheit 260 auch eine Art Wiegeschritt initiieren, so dass für das Blockierelement die Möglichkeit besteht, vor oder nach der Speiche hindurchzugreifen.

Optional kann vorgesehen sein, dass zusätzliche Parameter durch einen oder mehrere geeignete Sensoren 240 eingelesen werden. So kann beispielsweise detektiert werden, ob das Fahrrad sich während der Schließanforderung durch den Fahrer noch bewegt. In diesem Fall wird auch bei Erkennung eines (kurzzeitig) offenen Wegs für das Blockierelement eine Ansteuerung des Betätigungselements 250 durch die Verarbeitungseinheit 210 unterbunden, um die Gefahr eines Sturzes zu verhindern.

## Patentansprüche

1. Vorrichtung zur Diebstahlsicherung einsetzbar an einem Zweirad, mit
• einer Steuereinheit (200), und
• einer Schließeinrichtung (100), welche geeignet ist, ein Rad des Zweirads zu blockieren und elektrisch betätigbar ist, und
• einer Detektionseinheit (190, 230), die erfasst, ob eine Blockierung des Rades durch die Schließeinrichtung (100) erfolgen kann,
**dadurch gekennzeichnet, dass**
die Steuereinheit (200) die Schließeinrichtung (100) erst betätigt, wenn eine Schließung der Schließeinrichtung und somit eine Blockierung möglich ist.

2. Vorrichtung nach Anspruch 1, **dadurch gekennzeichnet, dass** die Detektionseinheit (190, 230) ein Hindernis auf dem Blockierweg des Blockierelements erfasst.

3. Vorrichtung nach Anspruch 1 oder 2, **dadurch gekennzeichnet, dass** die Schließeinrichtung (100) ein Blockierelement (125) aufweist, insbesondere einen Riegel oder einen Bolzen, welcher mittels einer elektromechanischer Betätigungseinrichtung (160) derart bewegt werden kann, dass es zu einer Blockierung des Rades kommt.

4. Vorrichtung nach einem der Ansprüche 2 bis 3, **dadurch gekennzeichnet, dass** die Detektionseinheit (190, 230) die Position wenigstens einer Speiche (180) des Rads im Blockierweg des Blockierelements (125) erfasst, wobei die Steuereinheit (200) die Schließeinrichtung (100) nur dann betätigt, wenn in der Bewegungsrichtung des Blockierelements (125) kein Hindernis, insbesondere keine Speiche (180), vorhanden ist.

5. Vorrichtung nach einem der Ansprüche 2 bis 4, **dadurch gekennzeichnet, dass** die elektrisch aktivierbare Betätigungseinrichtung (160) einen Motor, eine Spindel, eine Feder oder einen Magnet aufweist, wobei vorgesehen ist, dass die Aktivierung die Bewegung des Blockierelements (125) erzeugt.

6. Vorrichtung nach einem der vorhergehenden Ansprüche, **dadurch gekennzeichnet, dass** die Steuereinheit (200)in Abhängigkeit der Detektion der Blockiermöglichkeit erkennt, dass eine Blockierung des Rades durch die Schließeinrichtung (100) nicht möglich ist und einen am Zweirad, insbesondere an einem Elektrofahrrad, befindliche Antriebseinheit (260) derart ansteuert, dass das Rad, an dem die Schließeinrichtung (100) montierbar ist, in eine für die Schließeinrichtung (100) blockierbare Stellung bewegt wird.

7. Verfahren zur Aktivierung einer Diebstahlsicherung an einem Zweirad, in einer Vorrichtung nach einem der Ansprüche 1 bis 6, wobei
• eine Schließeinrichtung (100) zur Blockierung eines Rades des Zweirads aktiviert wird, und
• die Möglichkeit zur Blockierung des Rades durch die Schließeinrichtung (100) erfasst wird,
wobei die-Schließeinrichtung (100) erst dann betätigt wird, wenn eine Schließung erfolgen kann d.h. eine Blockierung möglich wird.

8. Verfahren nach Anspruch 7, **dadurch gekennzeichnet, dass** die Schließeinrichtung (100) ein Blockierelement (125) aufweist, welches mittels einer Betätigungseinrichtung (160) derart bewegt werden kann, dass es zu einer Blockierung des Rades kommt, wobei die Schließeinrichtung (100) nur dann aktiviert wird, wenn kein Hindernis im Blockierweg erkannt wird.

9. Verfahren nach Anspruch 7 oder 8, **dadurch gekennzeichnet, dass** in Abhängigkeit der Erfassung der Blockiermöglichkeit eine Antriebseinheit (260) des Zweirads angesteuert wird, die das Rad antreibt, um das Rad in eine Position zu bringen, in dem eine Blockierung durch die Schließeinrichtung (100) ermöglicht wird.

10. Fahrrad, insbesondere ein Elektrofahrrad, mit einer Vorrichtung nach einem der Ansprüche 1 bis 6, mit
• einer Steuereinheit (200), in der ein Verfahren nach einem der Ansprüche 7 bis 9 abläuft, und
• einer Schließeinrichtung (100), welche geeignet ist, ein Rad des Zweirads zu blockieren und elektrisch betätigbar ist, und
• einer Detektionseinheit (190, 230), die erfasst, ob eine Blockierung des Rades durch die Schließeinrichtung (100) möglich ist,
wobei
die Steuereinheit (200)in Abhängigkeit der Blockiermöglichkeit die Schließeinrichtung (100) betätigt.

11. Fahrrad nach Anspruch 9, mit einer Antriebseinheit (260), welcher dazu geeignet ist, wenigstens teilweise ein Antriebsmoment auf das Rad auszuüben, **dadurch gekennzeichnet, dass** in Abhängigkeit der Erfassung der Blockiermöglichkeit bei der Aktivierung der Schließeinrichtung (100) das Rad in eine Position gebracht wird, in der eine Blockierung des Rades durch die Schließeinrichtung (100) ermöglicht wird.

## Claims

1. Anti-theft device which can be used on a two-wheeled vehicle, having
• a control unit (200) and
• a locking device (100) which is suitable for blocking a wheel of the two-wheeled vehicle and can be actuated electrically, and
• a detection unit (190, 230) which detects whether the wheel can be blocked by the locking device (100),
**characterized in that**
the control unit (200) actuates the locking device (100) if it is possible to lock the locking device and therefore bring about blocking.

2. Device according to Claim 1, **characterized in that** the detection unit (190, 230) detects an obstacle on the blocking path of the blocking element.

3. Device according to Claim 1 or 2, **characterized in that** the locking device (100) has a blocking element (125), in particular a bar or bolt by means of which an electromechanical actuating device (160) can be moved in such a way that blocking of the wheel occurs.

4. Device according to one of Claims 2 to 3, **characterized in that** the detection unit (190, 230) detects the position of at least one spoke (180) of the wheel in the blocking path of the blocking element (125), wherein the control unit (200) actuates the locking device (100) only if there is no obstacle, in particular no spoke (180), present in the direction of movement of the blocking element (125).

5. Device according to one of Claims 2 to 4, **characterized in that** the actuating device (160) which can be activated electrically has a motor, a spindle, a spring or a magnet, wherein there is provision that the activation generates the movement of the blocking element (125).

6. Device according to one of the preceding claims, **characterized in that** the control unit (200) detects, as a function of the detection of the blocking possibility, that blocking of the wheel by the locking device (100) is not possible, and actuates a drive unit (260), located on the two-wheeled vehicle, in particular on an electric bicycle, in such a way that the wheel on which the locking device (100) can be mounted is moved into a position which can be blocked by the locking device (100).

7. Method for activating anti-theft protection on a two-wheeled vehicle, in a device according to one of Claims 1 to 6, wherein
• a locking device (100) for blocking a wheel of the two-wheeled vehicle is activated, and
• the possibility of blocking the wheel by means of the locking device (100) is detected,
wherein
the locking device (100) is not actuated until locking can take place, i.e. blocking becomes possible.

8. Method according to Claim 7, **characterized in that** the locking device (100) has a blocking element (125) which can be moved by means of an actuating device (160) in such a way that blocking of the wheel occurs, wherein the locking device (100) is activated only if no obstacle is detected in the blocking path.

9. Method according to Claim 7 or 8, **characterized in that** a drive unit (260) of the two-wheeled vehicle is actuated as a function of the detection of the blocking possibility, which drive unit (260) drives the wheel in order to move the wheel into a position in which blocking by the locking device (100) is made possible.

10. Bicycle, in particular an electric bicycle, having a device according to one of Claims 1 to 6, having
• a control unit (200) in which a method according to one of Claims 7 to 9 takes place, and
• a locking device (100) which is suitable for blocking a wheel of the two-wheeled vehicle and can be actuated electrically, and
• a detection unit (190, 230) which detects whether a blocking of the wheel by the locking device (100) is possible,
wherein
the control unit (200) actuates the locking device (100) as a function of the blocking possibility.

11. Bicycle according to Claim 9, having a drive unit (260) which is suited for at least partially applying a driving torque to the wheel, **characterized in that**, as a function of the detection of the blocking possibility during the activation of the locking device (100), the wheel is moved into a position in which blocking of the wheel by the locking device (100) is made possible.

## Revendications

1. Dispositif de sécurité antivol utilisable sur un deux-roues, comprenant
* une unité de commande (200), et
* un appareil de fermeture (100) qui est conçu pour bloquer une roue du deux-roues et qui peut être actionné électriquement, et
* une unité de détection (190, 230) qui détecte si un blocage de la roue par l'appareil de fermeture (100) peut avoir lieu,
**caractérisé en ce que**
l'unité de commande (200) n'actionne l'appareil de fermeture (100) que lorsqu'une fermeture de l'appareil de fermeture et ainsi un blocage est possible.

2. Dispositif selon la revendication 1, **caractérisé en ce que** l'unité de détection (190, 230) détecte un obstacle sur la course de blocage de l'élément de blocage.

3. Dispositif selon la revendication 1 ou 2, **caractérisé en ce que** l'appareil de fermeture (100) possède un élément de blocage (125), notamment un verrou ou un goujon, qui peut être déplacé au moyen d'un appareil d'actionnement électromécanique (160) de telle sorte qu'il se produit un blocage de la roue.

4. Dispositif selon l'une des revendications 2 à 3, **caractérisé en ce que** l'unité de détection (190, 230) détecte la position d'au moins un rayon (180) de la roue dans la course de blocage de l'élément de blocage (125), l'unité de commande (200) n'actionnant l'appareil de fermeture (100) que si aucun obstacle, notamment aucun rayon (180), n'est présent dans le sens de déplacement de l'élément de blocage (125).

5. Dispositif selon l'une des revendications 2 à 4, **caractérisé en ce que** l'appareil d'actionnement (160) pouvant être actionné électriquement possède un moteur, une broche, un ressort ou un aimant, l'activation étant conçue pour provoquer le mouvement de l'élément de blocage (125).

6. Dispositif selon l'une des revendications précédentes, **caractérisé en ce que** l'unité de commande (200) reconnaît, en fonction de la détection de la possibilité de blocage, qu'un blocage de la roue par l'appareil de fermeture (100) est impossible et commande une unité d'entraînement (260) qui se trouve sur le deux-roues, notamment sur une bicyclette électrique, de telle sorte que la roue sur laquelle peut être monté l'appareil de fermeture (100) soit déplacée dans une position dans laquelle le blocage par l'appareil de fermeture (100) est possible.

7. Procédé d'activation d'une sécurité antivol utilisable sur un deux-roues, dans un dispositif selon l'une des revendications 1 à 6,
* un appareil de fermeture (100) conçu pour bloquer une roue du deux-roues étant activé, et
* la possibilité de blocage de la roue étant détectée par l'appareil de fermeture (100),
l'appareil de fermeture (100) n'étant actionné que lorsqu'une fermeture peut avoir lieu, c'est-à-dire qu'un blocage est possible.

8. Procédé selon la revendication 7, **caractérisé en ce que** l'appareil de fermeture (100) possède un élément de blocage (125), lequel peut être déplacé au moyen d'un appareil d'actionnement (160) de telle sorte qu'il se produit un blocage de la roue, l'appareil de fermeture (100) n'étant activé que si aucun obstacle n'est détecté dans la course de fermeture.

9. Procédé selon la revendication 7 ou 8, **caractérisé en ce qu'**une unité d'entraînement (260) du deux-roues est commandée en fonction de la détection d'une possibilité de blocage, laquelle entraîne la roue pour amener la roue dans une position dans laquelle un blocage par l'appareil de fermeture (100) est rendu possible.

10. Bicyclette, notamment bicyclette électrique, équipée d'un dispositif selon l'une des revendications 1 à 6, comprenant
* une unité de commande (200) dans laquelle est mis en oeuvre un procédé selon l'une des revendications 7 à 9, et
* un appareil de fermeture (100) qui est conçu pour bloquer une roue du deux-roues et qui peut être actionné électriquement, et
* une unité de détection (190, 230) qui détecte si un blocage de la roue par l'appareil de fermeture (100) est possible,
l'unité de commande (200) actionnant l'appareil de fermeture (100) en fonction de la possibilité de blocage.

11. Bicyclette selon la revendication 9, comprenant une unité d'entraînement (260) qui est conçue pour exercer au moins partiellement un couple d'entraînement sur la roue, **caractérisée en ce qu'**en fonction de la détection de la possibilité de blocage lors de l'activation de l'appareil de fermeture (100), la roue est amenée dans une position dans laquelle un blocage par l'appareil de fermeture (100) est rendu possible.
